# EUROPÄISCHE PATENTSCHRIFT

(11) **EP 3 510 313 B1**
(45) Veröffentlichungstag und Bekanntmachung des Hinweises auf die Patenterteilung: **29.03.2023**
(21) Anmeldenummer: 17754128.1
(22) Anmeldetag: 08.08.2017
(51) Int. Cl.: F16L 37/107, F16L 37/113, F01N 13/18, F16L 27/12

(54) **BAJONETTVERBINDUNG ZUR VERBINDUNG EINES STUTZENS MIT EINEM ROHRFÖRMIGEN KÖRPER**
BAYONET CONNECTION FOR CONNECTING A CONNECTOR TO A TUBULAR BODY
RACCORD À BAÏONNETTE SERVANT À RELIER UNE TUBULURE À UN CORPS TUBULAIRE

(30) Priorität: 08.09.2016 DE 102016217128; 05.12.2016 DE 102016224088
(43) Veröffentlichungstag der Anmeldung: 17.07.2019
(73) Patentinhaber: Volkswagen Aktiengesellschaft, 38440 Wolfsburg (DE)
(72) Erfinder: DENEKE, Michael, 38118 Braunschweig (DE)
(86) Internationale Anmeldenummer: PCT/EP2017/070103
(87) Internationale Veröffentlichungsnummer: WO 2018/046215

(56) Entgegenhaltungen:
- DE-A1-102004 012 817
- FR-A- 347 723
- FR-E- 12 362
- GB-A- 2 165 608
- US-A- 2 673 751
- US-A1- 2004 256 096

## Beschreibung

Bajonettverbindung zur Verbindung eines Stutzens mit einem rohrförmigen Körper Die Erfindung betrifft eine Bajonettverbindung zur Verbindung eines Stutzens mit einem rohrförmigen Körper.

Bajonettverbindungen sind schnell herstell- und lösbare mechanische Verbindungen zweier zylindrischer (rohrförmiger) Körper. Die Körper werden durch Ineinanderstecken und Verdrehen relativ zueinander um die Längsachse der Körper verbunden. Die Lösung der Verbindung erfolgt durch Verdrehen der Körper relativ zueinander in die entgegengesetzte Richtung oder durch weiteres Verdrehen in die gleiche Richtung und Auseinanderziehen der Körper.

Die DE 39 01 425 A1 beschreibt eine derartige Bajonettverbindung für Fahrzeug-Abgasrohre.

Die dort beschriebene Bajonettverbindung zeichnet sich besonders durch eine hohe Sicherheit gegen unbeabsichtigtes Lösen der Verbindung aus. Die beiden zu verbindenden Körper müssen jedoch exakt zueinander, insbesondere axial, positionierbar sein, damit ein Bajonett-Verschlussstück, welches auf einem ersten Rohr sitzt, eine Verriegelungskontur eines zweiten Rohrs umgreifen kann.

Die DE 10 2004 012 817 A1 beschreibt eine Bajonettverbindung für miteinander zu verbindende Rohrabschnitte. Insbesondere bei einer axialen Abdichtung wird als Vorteil herausgestellt, dass die Rohrabschnitte ohne Verschiebeweg zueinander befestigt werden können. Hierzu müssen die Rohrabschnitte jedoch eine ausreichend genaue Positionierung zueinander bereits vor der Montage aufweisen.

Die GB 2 165 608 A zeigt eine Bajonettverbindung zur Verbindung eines Stutzens mit einem rohrförmigen Körper, aufweisend den Stutzen mit außenseitig an dem Stutzen angeordneten Bajonettflügeln, den rohrförmigen Körper und einen Bajonettring mit nach innen gerichteten Bajonetthaken.

Bei Verbindung eines Stutzens mit einem rohrförmigen Körper können weitere Anforderungen an eine Bajonettverbindung gestellt werden, wenn sowohl der Stutzen als auch der rohrförmige Körper bereits vor Herstellung der Bajonettverbindung jeweils an einem Bauteil fest angeordnet sind. Insbesondere durch Lagetoleranzen der Bauteile zueinander oder durch Bauteiltoleranzen des Stutzens oder des rohrförmigen Körpers kann es je nach Lage der Toleranzen zu abweichenden relativen Positionen des Stutzens und des rohrförmigen Körpers zueinander kommen. Eine Ausrichtungsänderung von Stutzen zu rohrförmigem Körper zur Herstellung der Bajonettverbindung ist dann durch die feste Anordnung an anderen Bauteilen nicht ermöglicht. Wird durch die Auswahl der Konstruktionsart der Bajonettverbindung eine hinreichend genaue Position von Stutzen zu rohrförmigem Körper für die Herstellung der Bajonettverbindung gefordert, kann in ungünstigen Toleranzlagen die Herstellung der Bajonettverbindung verhindert sein. Ist der Anteil dieser möglichen unzulässigen Toleranzlagen für die Wirtschaftlichkeit des Produkts zu hoch, müssen dann andere Verbindungsarten gewählt werden oder hohe Anforderungen an die Positions- und Maßtoleranzen gestellt werden, was wiederum mit höheren Kosten verbunden ist.

Aufgabe der vorliegenden Erfindung ist es, eine Bajonettverbindung bereitzustellen, welche Positionsabweichungen des zu verbindenden Stutzens und rohrförmigen Körpers kompensieren kann.

Diese Aufgabe wird erfindungsgemäß durch eine Bajonettverbindung zur Verbindung eines Stutzens mit einem rohrförmigen Körper mit den Merkmalen gemäß Anspruch 1 gelöst. Vorteilhafte Weiterbildungen der Erfindung sind in den abhängigen Ansprüchen charakterisiert.

Eine erfindungsgemäße Bajonettverbindung zur Verbindung eines Stutzens mit einem rohrförmigen Körper weist besagten Stutzen auf. Außenseitig an dem Stutzen sind Bajonettflügel angeordnet. Der rohrförmige Körper besitzt wenigstens eine außenseitig an dem rohrförmigen Körper angeordnete Außenbajonettkontur. Die Bajonettverbindung weist weiterhin einen Bajonettring auf, wobei der Bajonettring nach innen gerichtete Bajonetthaken und wenigstens eine nach innen gerichtete Innenbajonettkontur aufweist. In einem montierten Zustand der Bajonettverbindung befinden sich Stutzen, rohrförmiger Körper und Bajonettring in einer Verriegelungs-Ausrichtung zueinander. In diesem Zustand umschließt der Bajonettring den Stutzen und den rohrförmigen Körper in radialer Richtung nach außen und sichert den Stutzen und den rohrförmigen Körper gegen Herausziehen aus dem Bajonettring. Diese Sicherung wird einerseits dadurch erreicht, dass die Bajonettflügel und die Bajonetthaken einen Formschluss gegen Herausziehen des Stutzens und andererseits die Außenbajonettkontur und die Innenbajonettkontur einen Formschluss gegen Herausziehen des rohrförmigen Körpers bewirken.

Erfindungsgemäß weist der Bajonettring eine Mehrzahl von Innenbajonettkonturen auf, welche im Wesentlichen geometrisch identisch und in mehreren zu der Mittelachse des Bajonettrings senkrechten Ebenen angeordnet sind. Alternativ weist der rohrförmige Körper eine Mehrzahl von Außenbajonettkonturen auf, welche im Wesentlichen geometrisch identisch und in mehreren zu der Mittelachse des rohrförmigen Körpers senkrechten Ebenen angeordnet sind.

Der Stutzen ist ein zumindest in dem Bereich der Bajonettverbindung rohrartig geformter Körper, das heißt, dass der Stutzen im Bereich der Bajonettverbindung eine zylindrisch geformte Wand aufweist, welche einen Außendurchmesser und einen Innendurchmesser aufweist. Der Stutzen ist insofern zum Leiten eines Fluids geeignet. An dem Stutzen sind außenseitig Bajonettflügel angeordnet. Die Bajonettflügel können in Form eines Flansches ausgeführt sein, welcher sich aber nicht vollumfänglich um den Stutzen herum erstreckt, sondern an einer oder mehreren Stellen segmentartig unterbrochen ist. Die Bajonettflügel können einteilig mit dem Stutzen oder auch als mit dem Stutzen verbundene Körper ausgeführt sein.

Der rohrförmige Körper ist zumindest in dem Bereich der Bajonettverbindung rohrförmig ausgeführt. Es kann vorgesehen sein, dass der rohrförmige Körper außerhalb des Bereichs der Bajonettverbindung in eine andere, nicht rohrförmige Kontur übergeht. Im Bereich der Bajonettverbindung ist der rohrförmige Körper als eine zylindrisch geformte Wand ausgeführt, welche einen Außendurchmesser und einen Innendurchmesser aufweist. Der rohrförmige Körper ist demnach zum Leiten eines Fluids geeignet. Der rohrförmige Körper kann einen Innendurchmesser aufweisen, welcher größer als der Außendurchmesser des Stutzens gewählt ist, so dass der rohrförmige Körper zur Verbindung von Stutzen und rohrförmigem Körper über das Ende des Stutzens geführt werden kann. In anderen Worten kann dadurch der Stutzen zumindest teilweise in den rohrförmigen Körper gesteckt werden.

Außenseitig an dem rohrförmigen Körper ist wenigstens Außenbajonettkontur angeordnet. Eine Außenbajonettkontur bezeichnet dabei eine Kontur, welche sich flanschartig und bevorzugt rotationssymmetrisch um die Mittelachse des rohrförmigen Körpers im Bereich der Bajonettverbindung erstreckt. Um für eine Bajonettverbindung geeignet zu sein, muss die Außenbajonettkontur in zumindest einem Segment über den Umfang der Außenbajonettkontur unterbrochen sein. In diesem Segment ist demnach keine Außenbajonettkontur oder alternativ eine Kontur mit einem geringeren maximalen Außendurchmesser vorhanden. In einer Ausführungsart kann die Außenbajonettkontur in mehreren Segmenten unterbrochen sein. Die Außenbajonettkontur kann einteilig mit dem rohrförmigen Körper oder alternativ als mit dem rohrförmigen Körper verbundenes Bauteil ausgeführt sein.

Der Bajonettring ist ein zumindest teilweise rohrartig geformter Körper und weist demnach eine teilweise zylindrisch geformte Wand auf, welche einen Innendurchmesser und einen Außendurchmesser aufweist. Der Innendurchmesser des rohrartigen Abschnitts des Bajonettrings kann einen Innendurchmesser aufweisen, welcher größer als der Außendurchmesser des rohrförmigen Körpers gewählt ist, so dass der Bajonettring zumindest teilweise über den rohrförmigen Körper geschoben werden kann. An dem Bajonettring sind Bajonetthaken ausgeformt oder angeordnet. Die Bajonetthaken sind nach innen gerichtet und weisen einen kleinsten Innendurchmesser auf, welcher kleiner als der größte Außendurchmesser der Bajonettflügel des Stutzens gewählt ist. Die Bajonetthaken sind im Wesentlichen bevorzugt rotationssymmetrisch ausgeführt, wobei diese sich aber nicht vollumfänglich flanschartig erstrecken. Die Bajonetthaken sind demnach in einem oder mehreren Segmenten unterbrochen. Das heißt, dass in diesen Segmenten die Bajonetthaken einen kleinsten Innendurchmesser aufweisen, welcher größer als der größte Außendurchmesser der Bajonettflügel des Stutzens gewählt ist. Die Bajonetthaken können als das Negativ der unterbrochenen Segmente der Bajonettflügel des Stutzens ausgebildet sein. Beispielsweise können, wenn die Bajonettflügel in zwei Segmenten über jeweils einen gewählten Winkelbereich unterbrochen sind, die Bajonetthaken nur in entsprechenden Winkelbereichen ausgebildet sein, während die Bajonetthaken in den anderen Segmenten unterbrochen sind. Es kann vorgesehen sein, dass die Winkelbereiche der voll ausgebildeten Segmente der Bajonetthaken kleiner als die Winkelbereiche der unterbrochenen Segmente der Bajonettflügel ausgebildet sind, so dass Form- und Lagetoleranzen der Bauteile akzeptierbar sind.

Durch die beschriebene Ausführung der Bajonetthaken und der Bajonettflügel sowie der Durchmesser des Bajonettrings, des rohrförmigen Körpers und des Stutzens ist es ermöglicht, dass der rohrförmige Körper zumindest teilweise über den Stutzen geschoben werden kann. Der Bajonettring ist dann wiederum über den rohrförmigen Körper und damit auch über den Stutzen schiebbar. Dabei können die Bajonetthaken durch die unterbrochenen Segmente der Bajonettflügel hindurch geschoben werden. Das heißt, dass die Bajonetthaken auf der dem rohrförmigen Körper abgewandten Seite der Bajonettflügel positioniert werden können. Durch eine Drehung des Bajonettrings um die dann koaxialen Mittelachsen des Stutzens, des rohrförmigen Körpers und des Bajonettrings können die Bajonetthaken axial betrachtet hinter den Bajonettflügeln aus den unterbrochenen Segmenten der Bajonettflügel heraus hinter die vollständig ausgebildeten Segmente der Bajonettflügel geschwenkt werden. Dadurch kann eine formschlüssige Verbindung des Bajonettrings mit dem Stutzen gegen Verschieben des Bajonettrings in Richtung des rohrförmigen Körpers, das heißt gegen ein Abziehen des Bajonettrings von dem Stutzen, bereitgestellt werden.

Erfindungsgemäß weist der Bajonettring weiterhin wenigstens eine nach innen gerichtete Innenbajonettkontur auf. Eine Innenbajonettkontur bezeichnet dabei eine Kontur, welche sich flanschartig und bevorzugt rotationssymmetrisch um die Mittelachse des Bajonettrings erstreckt. Um für eine Bajonettverbindung geeignet zu sein, muss die Innenbajonettkontur in zumindest einem Segment über den Umfang der Innenbajonettkontur unterbrochen sein. In diesem Segment ist demnach keine Innenbajonettkontur oder alternativ eine Kontur mit einem größeren minimalen Innendurchmesser vorhanden. In einer Ausführungsart kann die Innenbajonettkontur in mehreren Segmenten unterbrochen sein. Die Innenbajonettkontur kann einteilig mit dem Bajonettring oder alternativ als mit dem Bajonettring verbundenes Bauteil ausgeführt sein. Die Innenbajonettkontur ist nach innen gerichtet und weist einen kleinsten Innendurchmesser auf, welcher kleiner als der größte Außendurchmesser der Außenbajonettkontur des rohrförmigen Körpers gewählt ist. Die Innenbajonettkontur ist bevorzugt im Wesentlichen rotationssymmetrisch ausgeführt, wobei diese sich aber nicht vollumfänglich flanschartig erstreckt. Die Innenbajonettkontur ist demnach in einem oder mehreren Segmenten unterbrochen. Das heißt, dass in diesen Segmenten die Innenbajonettkontur einen kleinsten Innendurchmesser aufweist, welcher größer als der größte Außendurchmesser der Außenbajonettkontur des rohrförmigen Körpers gewählt ist. Die Innenbajonettkontur kann als das Negativ der Außenbajonettkontur des rohrförmigen Körpers ausgebildet sein. Beispielsweise kann, wenn die Außenbajonettkontur in zwei Segmenten über jeweils einen gewählten Winkelbereich unterbrochen ist, die Innenbajonettkontur nur in entsprechenden Winkelbereichen voll ausgebildet sein, während die Innenbajonettkontur in den anderen Segmenten unterbrochen ist. Es kann vorgesehen sein, dass die Winkelbereiche der voll ausgebildeten Segmente der Innenbajonettkontur kleiner als die Winkelbereiche der unterbrochenen Segmente der Außenbajonettkontur ausgebildet sind, so dass Form- und Lagetoleranzen der Bauteile akzeptierbar sind.

Durch die beschriebene Ausführung der Bajonetthaken und der Bajonettflügel sowie der Durchmesser des Bajonettrings, des rohrförmigen Körpers und des Stutzens ist es ermöglicht, dass der rohrförmige Körper zumindest teilweise über den Stutzen geschoben werden kann. Der Bajonettring ist dann wiederum über den rohrförmigen Körper und damit auch über den Stutzen schiebbar. Dabei kann die Innenbajonettkontur durch die unterbrochenen Segmente der Außenbajonettkontur hindurch geschoben werden. Durch eine Drehung des Bajonettrings um die dann koaxialen Mittelachsen des Stutzens, des rohrförmigen Körpers und des Bajonettrings können die voll ausgebildeten Segmente der Innenbajonettkontur axial betrachtet hinter der Außenbajonettkontur hinter die vollständig ausgebildeten Segmente der Außenbajonettkontur geschwenkt werden. Dadurch kann eine formschlüssige Verbindung des Bajonettrings mit dem rohrförmigen Körper gegen Verschieben des Bajonettrings in Richtung des Stutzes, das heißt gegen ein Abziehen des Bajonettrings von dem rohrförmigen Körper, bereitgestellt werden.

Es kann vorgesehen sein, dass der Bajonettring vor dem Zusammenstecken von rohrförmigem Körper und Stutzen bereits auf dem Stutzen oder dem rohrförmigen Körper anordenbar ist. Dann kann vorgesehen sein, dass die Innenbajonettkontur bereits vor dem Zusammenstecken von rohrförmigem Körper und Stutzen axial betrachtet hinter der Außenbajonettkontur angeordnet ist oder die Bajonetthaken bereits vor dem Zusammenstecken von rohrförmigem Körper und Stutzen axial betrachtet hinter den Bajonettflügeln angeordnet sind.

Erfindungsgemäß weist der Bajonettring eine Mehrzahl von Innenbajonettkonturen auf, welche im Wesentlichen geometrisch identisch sind und in mehreren zu der Mittelachse des Bajonettrings senkrechten Ebenen angeordnet sind. Erfindungsgemäß weist der Bajonettring demnach mindestens zwei Innenbajonettkonturen auf, welche im Wesentlichen geometrisch identisch sind. Die Innenbajonettkonturen sind dabei in mehreren zu der Mittelachse des Bajonettrings senkrechten Ebenen angeordnet, welche axial in Bezug auf die Mittelachse des Bajonettrings zueinander beabstandet sind. Erfindungsgemäß ist dadurch ermöglicht, dass die Bajonettverbindung in mehreren axialen Positionen des Bajonettrings in Bezug zu dem rohrförmigen Körper hergestellt werden kann. Je nach axialer Position des Bajonettrings in Bezug auf den rohrförmigen Körper liegt dabei nur eine Innenbajonettkontur hinter der Außenbajonettkontur an dieser an. Dadurch, dass mehrere Innenbajonettkonturen bereitgestellt sind, weist die Bajonettverbindung in verschiedenen axialen Positionen des Bajonettrings immer ein geringes axiales Spiel in der formschlüssigen Verbindung auf, während eine Bajonettverbindung aus dem Stand der Technik mit nur einer Innenbajonettkontur je nach axialer Position des Bajonettrings entweder ein großes Axialspiel aufwiese oder nicht herstellbar wäre. Durch Form- und Lagetoleranzen der Bauteile bedingte Positionsabweichungen des Bajonettrings zu dem rohrförmigen Körper können somit erfindungsgemäß kompensiert werden, wobei ein geringes Axialspiel der Bajonettverbindung gewährleistet ist.

Bevorzugt sind die Innenbajonettkonturen bezüglich ihrer voll ausgebildeten Segmente und ihrer unterbrochenen Segmente gleich ausgerichtet, so dass der Bajonettring in der gleichen Drehausrichtung über die Außenbajonettkontur geschoben werden kann, wobei mehrere Innenbajonettkonturen über die Außenbajonettkontur geschoben werden. Weiterhin bevorzugt sind die Ebenen, in denen die Innenbajonettkonturen angeordnet sind derart beabstandet, dass der axiale freie Raum zwischen zwei benachbarten Innenbajonettkonturen mindestens der axialen Erstreckung der Außenbajonettkontur entspricht. Es kann vorgesehen sein, dass bei drei oder mehr Innenbajonettkonturen die Innenbajonettkonturen axial äquidistant angeordnet sind, das heißt, dass die Ebenen, in denen die Innenbajonettkonturen angeordnet sind, axial äquidistant beabstandet sind.

Alternativ erfindungsgemäß kann der Bajonettring nur eine Innenbajonettkontur aufweisen, während der rohrförmige Körper eine Mehrzahl von Außenbajonettkonturen aufweist, welche im Wesentlichen geometrisch identisch sind und in mehreren zu der Mittelachse des rohrförmigen Körpers senkrechten Ebenen angeordnet sind. Erfindungsgemäß weist der rohrförmige Körper demnach mindestens zwei Außenbajonettkonturen auf, welche im Wesentlichen geometrisch identisch sind. Die Außenbajonettkonturen sind dabei in mehreren zu der Mittelachse des rohrförmigen Körpers senkrechten Ebenen angeordnet, welche axial in Bezug auf die Mittelachse des rohrförmigen Körpers zueinander beabstandet sind. Erfindungsgemäß ist auch dadurch ermöglicht, dass die Bajonettverbindung in mehreren axialen Positionen des Bajonettrings in Bezug zu dem rohrförmigen Körper hergestellt werden kann. Je nach axialer Position des Bajonettrings in Bezug auf den rohrförmigen Körper liegt dabei die Innenbajonettkontur nur hinter einer der Außenbajonettkonturen an dieser an. Dadurch, dass mehrere Außenbajonettkonturen bereitgestellt sind, weist die Bajonettverbindung in verschiedenen axialen Positionen des Bajonettrings immer ein geringes axiales Spiel in der formschlüssigen Verbindung auf, während eine Bajonettverbindung aus dem Stand der Technik mit nur einer Außenbajonettkontur je nach axialer Position des Bajonettrings entweder ein großes Axialspiel aufwiese oder nicht herstellbar wäre. Durch Form- und Lagetoleranzen der Bauteile bedingte Positionsabweichungen des Bajonettrings zu dem rohrförmigen Körper können somit erfindungsgemäß kompensiert werden, wobei ein geringes Axialspiel der Bajonettverbindung gewährleistet ist.

Bevorzugt sind die Außenbajonettkonturen bezüglich ihrer voll ausgebildeten Segmente und ihrer unterbrochenen Segmente gleich ausgerichtet, so dass der Bajonettring in der gleichen Drehausrichtung über mehrere Außenbajonettkonturen geschoben werden kann. Weiterhin bevorzugt sind die Ebenen, in denen die Außenbajonettkonturen angeordnet sind derart beabstandet, dass der axiale freie Raum zwischen zwei benachbarten Außenbajonettkonturen mindestens der axialen Erstreckung der Innenbajonettkontur entspricht. Es kann vorgesehen sein, dass bei drei oder mehr Außenbajonettkonturen die Außenbajonettkonturen axial äquidistant angeordnet sind, das heißt, dass die Ebenen, in denen die Außenbajonettkonturen angeordnet sind, axial äquidistant beabstandet sind.

Vorteilhaft ist vorgesehen, dass der Bajonettring eine Mehrzahl von Innenbajonettkonturen aufweist und auch der rohrförmige Körper eine Mehrzahl von Außenbajonettkonturen aufweist. Durch diese vorteilhafte Ausführung der Bajonettverbindung kann der Bereich der axialen Ausrichtung des rohrförmigen Körpers zu dem Bajonettring, in dem eine Verbindung ermöglicht ist, weiter vergrößert werden. Zusätzlich kann es dadurch ermöglicht sein, die Außenbajonettkonturen und/oder die Innenbajonettkonturen kleiner, das heißt mit einer geringeren Belastbarkeit einer einzelnen Kontur, auszuführen, wenn die Außenbajonettkonturen und die Innenbajonettkonturen derart axial angeordnet sind, dass bei den zulässigen Axialpositionen des rohrförmigen Körpers mehrere Außenbajonettkonturen mit mehreren Innenbajonettkonturen zur Anlage kommen. Auch hierbei sind bevorzugt die Ebenen, in denen die Außenbajonettkonturen angeordnet sind derart beabstandet, dass der axiale freie Raum zwischen benachbarten Außenbajonettkonturen mindestens der axialen Erstreckung einer Innenbajonettkontur entspricht, während die Ebenen, in denen die Innenbajonettkonturen angeordnet sind derart beabstandet sind, dass der axiale freie Raum zwischen benachbarten Innenbajonettkonturen mindestens der axialen Erstreckung einer Außenbajonettkontur entspricht. Es kann vorgesehen sein, dass bei drei oder mehr Innenbajonettkonturen die Innenbajonettkonturen axial äquidistant angeordnet sind, das heißt, dass die Ebenen, in denen die Innenbajonettkonturen angeordnet sind, axial äquidistant beabstandet sind.

Bevorzugt ist die Bajonettverbindung so ausgestaltet, dass die Innenbajonettkontur rotationssymmetrisch zu der Mittelachse des Bajonettrings ist und die Außenbajonettkontur rotationssymmetrisch zu der Mittelachse des rohrförmigen Körpers ist. Durch eine derartige Ausführung sind eine einfache Herstellbarkeit der Konturen und weiterhin ein einfaches Verdrehen des Bajonettrings in Bezug zu dem rohrförmigen Körper gewährleistet.

Sind die Innenbajonettkontur und die Außenbajonettkontur jeweils in zwei Winkelsegmenten vollständig ausgebildet, stellt dies einen guten Kompromiss zwischen der Anzahl der herzustellenden Segmente und der Haltbarkeit der Verbindung dar. Weiterhin ist damit ein großer Winkelbereich bezüglich der Drehausrichtung des Bajonettrings gegeben, in welchem eine Innenbajonettkontur axial hinter einer Außenbajonettkontur in Anlage ist.

Der Stutzen kann an seinem Außenumfang eine Dichtung aufweisen. Die Dichtung kann insbesondere als Dichtring ausgeführt sein, welcher formschlüssig in eine Nut in dem Außenumfang des Stutzens eingelegt ist. Wird bei der Herstellung der Bajonettverbindung der rohrförmige Körper über den Stutzen geschoben, liegt die Dichtung am Innenumfang des rohrförmigen Körpers und am Außenumfang des Stutzens an. Der Innenraum von Stutzen und rohrförmigem Körper, welcher geeignet ist, von einem Fluid durchströmt zu werden, ist dann gegen die Umgebung der Bajonettverbindung abgedichtet.

Bevorzugt können die Innenbajonettkontur einstückig mit dem Bajonettring und die Außenbajonettkontur einstückig mit dem rohrförmigen Körper ausgebildet sein. Dadurch ergibt sich eine gute Haltbarkeit der Bajonettverbindung sowie eine einfache Herstellung der Bauteile dieser.

Weitere Vorteile und vorteilhafte Ausführungsformen und Weiterbildungen der Erfindung werden anhand der nachfolgenden Beschreibung unter Bezugnahme auf die Figuren dargestellt. Es zeigt im Einzelnen:
- Figur 1: Eine perspektivische Darstellung einer Ausführungsform einer erfindungsgemäßen Bajonettverbindung im nicht verbundenen Zustand
- Figur 2: Einen Schnitt durch die Darstellung gemäß der Figur 1 entlang einer Ebene durch die Mittelachse des Bajonettrings
- Figur 3: Eine perspektivische Darstellung der Ausführungsform der erfindungsgemäßen Bajonettverbindung in einem Zustand zwischen nicht verbundenem und verbundenem Zustand
- Figur 4: Eine Schnittdarstellung der Ausführungsform der erfindungsgemäßen Bajonettverbindung im verbundenen Zustand entlang einer Ebene durch die Mittelachse des Bajonettrings
- Figur 5: Eine Schnittdarstellung der Ausführungsform der erfindungsgemäßen Bajonettverbindung entlang einer Ebene durch die Mittelachse des Bajonettrings, wobei mehrere Verbindungszustände aufgrund von verschiedenen axialen Positionen des rohrförmigen Körpers dargestellt sind

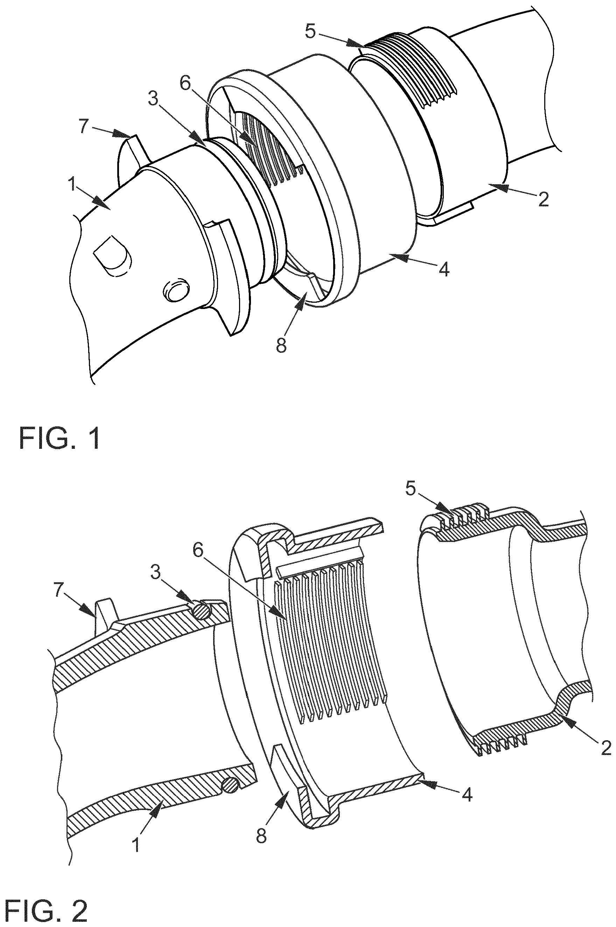

Figur 1 zeigt eine perspektivische Darstellung einer Ausführungsform einer erfindungsgemäßen Bajonettverbindung im nicht verbundenen Zustand. Ein Stutzen 1, welcher den rohrförmigen Ausgang eines nicht dargestellten Verdichters eines Abgasturboladers einer Brennkraftmaschine bildet, weist zwei Bajonettflügel 7 auf, welche sich radial nach außen erstrecken. Die Bajonettflügel 7 sind um die Mittelachse des Stutzens 1 rotationssymmetrisch und in zwei Winkelsegmenten ausgebildet, das heißt die Bajonettflügel 7 umschließen den Stutzen 1 nicht vollumfänglich. Der Stutzen 1 soll mit dem Ende eines rohrförmigen Körpers 2, ausgebildet als Druckrohr der Brennkraftmaschine, verbunden werden.

Der als Druckrohr ausgebildete rohrförmige Körper 2 dient der Führung der verdichteten Frischluft stromabwärts des Verdichters in Richtung der Brennräume der Brennkraftmaschine. Der rohrförmige Körper 2 weist einen Innendurchmesser auf, welcher derart dimensioniert ist, dass bei dem Zusammenstecken von rohrförmigem Körper 2 und Stutzen 1 der rohrförmige Körper 2 den Stutzen 1 in radialer Richtung umschließen kann. Der rohrförmige Körper 2 weist mindestens zwei Ebenen von Außenbajonettkonturen 5 auf, welche sich radial nach außen von dem rohrförmigen Körper 2 aus erstrecken und einteilig mit dem rohrförmigen Körper 2 ausgebildet sind. Die Figur 1 zeigt sechs Ebenen von Außenbajonettkonturen 5. Die Außenbajonettkonturen 5 sind um die Mittelachse des rohrförmigen Körpers 2 rotationssymmetrisch und in zwei Winkelsegmenten ausgebildet, das heißt die Außenbajonettkonturen 5 umschließen den rohrförmigen Körper 2 nicht vollumfänglich.

In dem Stutzen 1 ist in einer radial auswärts gerichteten Nut eine Dichtung 3 angeordnet. Wenn der rohrförmige Körper 2 den Stutzen1 radial umschließt, liegt die Dichtung 3 an der Innenfläche des rohrförmigen Körpers 2 an, so dass die Verbindungsstelle abgedichtet ist. Zur Fixierung der Verbindung ist ein Bajonettring 4 vorgesehen. Der Bajonettring 4 ist bezüglich seines Durchmessers größer als Stutzen 1 und rohrförmiger Körper 2, so dass er außen um die Verbindungsstelle von Stutzen 1 und rohrförmigem Körper 2 herumgeführt werden kann. Der Bajonettring 4 weist Bajonetthaken 8 auf, welche mit den Bajonettflügeln 7 korrespondieren. Die Bajonetthaken 8 sind um die Mittelachse des Bajonettrings 4 rotationssymmetrisch und in zwei Winkelsegmenten ausgebildet. Dabei sind die Segmente der Bajonetthaken 8 und die Segmente der Bajonettflügel 7 derart gestaltet, dass in einer Zusammensteck-Ausrichtung von Bajonettring 4 und Stutzen 1, in welcher die Mittelachsen von Stutzen 1 und Bajonettring 4 koaxial sind, die Bajonetthaken 8 bei Bewegung des Bajonettrings 4 in Richtung des Stutzens 1 durch die von den Segmenten der Bajonettflügel 7 ausgesparten Freiräume hindurchführbar sind.

Weiterhin weist der Bajonettring 4 mindestens zwei Ebenen von Innenbajonettkonturen 6 auf, welche sich radial nach innen von dem Bajonettring 4 aus erstrecken und einteilig mit dem Bajonettring 4 ausgebildet sind. Die Figur 1 zeigt zehn Ebenen von Innenbajonettkonturen 6. Die Innenbajonettkonturen 6 sind um die Mittelachse des Bajonettrings 4 rotationssymmetrisch und in zwei Winkelsegmenten ausgebildet, das heißt die Innenbajonettkonturen 6 sind nicht als vollumfängliche Rotationskörper ausgebildet. Die Innenbajonettkonturen 6 korrespondieren mit den Außenbajonettkonturen 5. Die Segmente der Innenbajonettkonturen 6 und die Segmente der Innenbajonettkonturen 5 sind derart gestaltet, dass in einer Zusammensteck-Ausrichtung von Bajonettring 4 und rohrförmigem Körper 2, in welcher die Mittelachsen von rohrförmigem Körper 2 und Bajonettring 4 koaxial sind, zumindest eine der Innenbajonettkonturen 6 bei Bewegung des Bajonettrings 4 in Richtung des rohrförmigen Körpers 2 bzw. Bewegung des rohrförmigen Körpers 2 in Richtung des Bajonettrings 4 durch die von den Segmenten zumindest einer der Außenbajonettkonturen 5 ausgesparten Freiräume hindurchführbar ist.

Diese Zusammensteck-Ausrichtung von Bajonettring 4, Stutzen 1 und rohrförmigem Körper 2 ist in Figur 1 in einer perspektivischen Ansicht dargestellt. Figur 2 ist eine Schnittdarstellung der Anordnung gemäß Figur 1, wobei gleiche Entitäten mit identischen Bezugszeichen versehen sind und nicht erneut beschrieben werden.

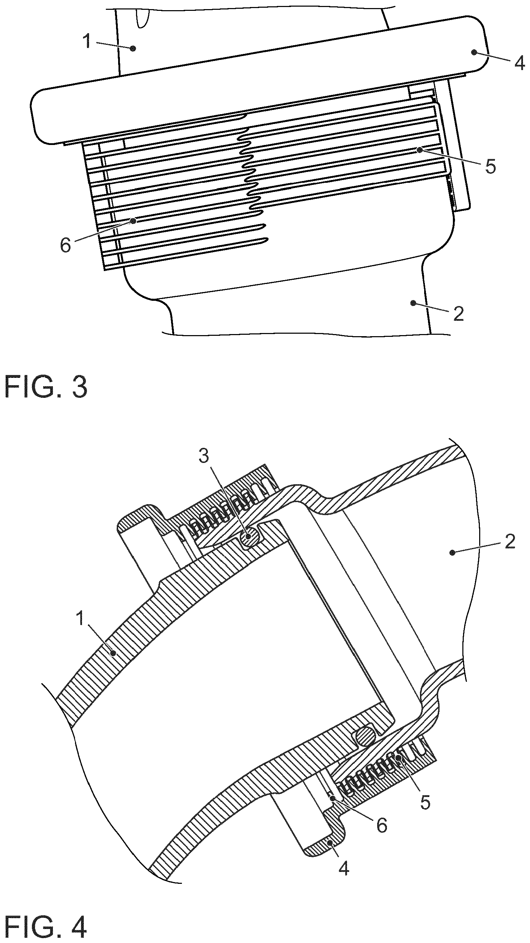

Figur 3 zeigt den Übergang von der Zusammensteck-Ausrichtung zu der Verriegelungs-Ausrichtung der Anordnung aus Bajonettring 4, Stutzen 1 und rohrförmigem Körper 2. Wenn Bajonettring 4, Stutzen 1 und rohrförmiger Körper 2 entlang ihrer Mittelachsen zusammengeschoben wurden, wird der Bajonettring 4 verdreht, um die Anordnung zu verriegeln. Während dieser Verdrehung werden die Bajonetthaken 8 bezüglich der Fügerichtung der Bajonettverbindung hinter den Bajonettflügeln 7 angeordnet (also auf der von dem rohrförmigen Körper 2 abgewandten Seite der Bajonettflügel 7), so dass ein Formschluss gegen Auseinanderziehen von Bajonettring 4 und Stutzen 1 gebildet ist. Gleichzeitig wird bei dieser Verdrehung zumindest eine der Innenbajonettkonturen 6 bezüglich der Fügerichtung der Bajonettverbindung hinter zumindest einer der Außenbajonettkonturen 5 angeordnet (also auf der von dem Stutzen 1 abgewandten Seite von zumindest einer der Außenbajonettkonturen 5), so dass ein Formschluss gegen Auseinanderziehen von Bajonettring 4 und rohrförmigem Körper 2 gebildet ist. Die Figur 3 zeigt den Beginn der Verdrehbewegung. Insbesondere ist in der Figur 3 erkennbar, wie die Innenbajonettkonturen 6 in Fügerichtung hinter den Außenbajonettkonturen 5 eingedreht werden. In der Figur 3 ist der Grundkörper des Bajonettrings 4 teilweise nicht dargestellt, so dass die Innenbajonettkonturen 6 und der rohrförmige Körper 2 erkennbar sind. Bei Fortsetzen der Verdrehung vergrößeren sich die Überdeckung der Innenbajonettkonturen 6 und Außenbajonettkonturen 5 und die Belastbarkeit der Verbindung.

Figur 4 ist eine Schnittdarstellung der Anordnung von Bajonettring 4, Stutzen 1 und rohrförmigem Körper 2 im verriegelten Zustand der Bajonettverbindung. Die sechs Außenbajonettkonturen 5 sind zwischen den zehn Innenbajonettkonturen 6 angeordnet und stellen folglich einen Formschluss in Fügerichtung her. Es ist erkennbar, dass die Außenbajonettkonturen 5 im Wesentlichen mittig bezüglich der Gesamtheit der Innenbajonettkonturen 6 angeordnet sind.

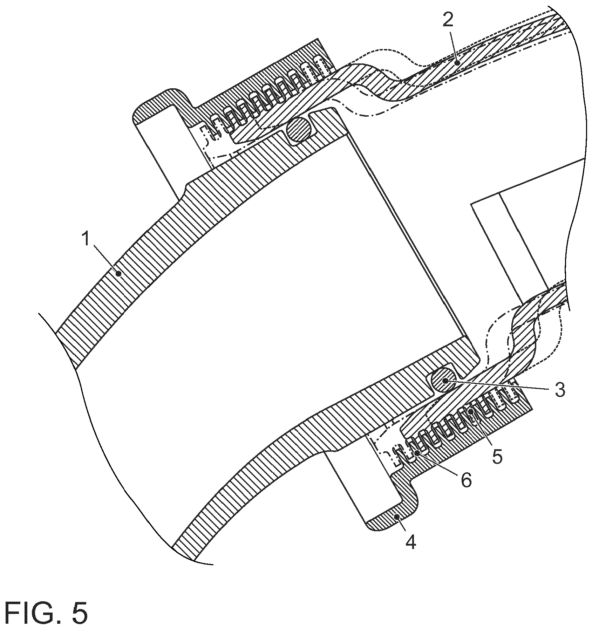

Erfindungsgemäß kann die vorgeschlagene Bajonettverbindung Toleranzabweichungen hinsichtlich der Lage von rohrförmigem Körper 2 relativ zu dem Stutzen 1 kompensieren. Dazu ist es vorgesehen, wie in Figur 4 ersichtlich, dass der rohrförmige Körper 2 auch mittels der erfindungsgemäßen Bajonettverbindung mit dem Stutzen 1 verbindbar ist, wenn der rohrförmige Körper 2 nicht so weit wie in Figur 4 über den Stutzen 1 schiebbar ist. Die Außenbajonettkonturen 5 wären in diesem Fall weiter rechts (in Richtung des rohrförmigen Körpers 2) in der Gesamtheit der Innenbajonettkonturen 6 angeordnet. Dies ist in Figur 5 dargestellt, welche den Schnitt gemäß Figur 4 mit zwei zusätzlich dargestellten, von der Position in Figur 4 abweichenden Positionen des rohrförmigen Körpers 2 zeigt.

### Bezugszeichenliste

- 1:: Stutzen
- 2:: Rohrförmiger Körper
- 3:: Dichtung
- 4:: Bajonettring
- 5:: Außenbajonettkontur
- 6:: Innenbajonettkontur
- 7:: Bajonettflügel
- 8:: Bajonetthaken

## Patentansprüche

1. Bajonettverbindung zur Verbindung eines Stutzens (1) mit einem rohrförmigen Körper (2), aufweisend den Stutzen (1) mit außenseitig an dem Stutzen (1) angeordneten Bajonettflügeln (7), den rohrförmigen Körper (2) mit wenigstens einer außenseitig an dem rohrförmigen Körper (2) angeordneten Außenbajonettkontur (5) und einen Bajonettring (4) mit nach innen gerichteten Bajonetthaken (8) und wenigstens einer nach innen gerichteten Innenbajonettkontur (6), wobei in einem montierten Zustand der Bajonettverbindung, in welchem sich Stutzen (1), rohrförmiger Körper (2) und Bajonettring (4) in einer Verriegelungs-Ausrichtung zueinander befinden, der Bajonettring (4) den Stutzen (1) und den rohrförmigen Körper (2) in radialer Richtung nach außen umschließt und den Stutzen (1) und den rohrförmigen Körper (2) gegen Herausziehen aus dem Bajonettring (4) sichert, indem einerseits die Bajonettflügel (7) und die Bajonetthaken (8) einen Formschluss gegen Herausziehen des Stutzens (1) und andererseits die Außenbajonettkontur (5) und die Innenbajonettkontur (6) einen Formschluss gegen Herausziehen des rohrförmigen Körpers (2) bewirken, wobei der Bajonettring (4) eine Mehrzahl von Innenbajonettkonturen (6) aufweist, welche im Wesentlichen geometrisch identisch sind und in mehreren zu der Mittelachse des Bajonettrings (4) senkrechten Ebenen angeordnet sind, und/oder der rohrförmige Körper (2) eine Mehrzahl von Außenbajonettkonturen (5) aufweist, welche im Wesentlichen geometrisch identisch sind und in mehreren zu der Mittelachse des rohrförmigen Körpers (2) senkrechten Ebenen angeordnet sind.

2. Bajonettverbindung nach Anspruch 1, **dadurch gekennzeichnet, dass** der Bajonettring (4) eine Mehrzahl von Innenbajonettkonturen (6) aufweist und der rohrförmige Körper (2) eine Mehrzahl von Außenbajonettkonturen (5) aufweist.

3. Bajonettverbindung nach einem der vorhergehenden Ansprüche, **dadurch gekennzeichnet, dass** die Innenbajonettkontur (6) rotationssymmetrisch zu der Mittelachse des Bajonettrings (4) und die Außenbajonettkontur (5) rotationssymmetrisch zu der Mittelachse des rohrförmigen Körpers (2) ist.

4. Bajonettverbindung nach Anspruch 3, **dadurch gekennzeichnet, dass** die Innenbajonettkontur (6) und die Außenbajonettkontur (5) jeweils in zwei Winkelsegmenten ausgebildet sind.

5. Bajonettverbindung nach einem der vorhergehenden Ansprüche, **dadurch gekennzeichnet, dass** in dem montierten Zustand der Bajonettverbindung der rohrförmige Körper (2) den Stutzen (1) abschnittsweise radial umschließt.

6. Bajonettverbindung nach einem Anspruch 5, **dadurch gekennzeichnet, dass** der Stutzen (1) an seinem Außenumfang eine Dichtung (3) aufweist.

7. Bajonettverbindung nach einem der vorhergehenden Ansprüche, **dadurch gekennzeichnet, dass** die Innenbajonettkontur (6) einstückig mit dem Bajonettring (4) und die Außenbajonettkontur (5) einstückig mit dem rohrförmigen Körper (2) ausgebildet ist.

## Claims

1. Bayonet connection for connecting a connecting piece (1) to a tubular body (2), comprising the connecting piece (1) with bayonet wings (7) arranged on the outside of the connecting piece (1), the tubular body (2) with at least one outer bayonet contour (5) arranged on the outside of the tubular body (2), and a bayonet ring (4) with inwardly directed bayonet hooks (8) and at least one inwardly directed inner bayonet contour (6), wherein, in an assembled state of the bayonet connection, in which the connecting piece (1), the tubular body (2) and the bayonet ring (4) are in a locking alignment relative to one another, the bayonet ring (4) surrounds the connecting piece (1) and the tubular body (2) outwardly in the radial direction and secures the connecting piece (1) and the tubular body (2) against being pulled out of the bayonet ring (4) in that, on the one hand, the bayonet wings (7) and the bayonet hooks (8) provide a form-fit to prevent the connecting piece (1) being pulled out and, on the other hand, the outer bayonet contour (5) and the inner bayonet contour (6) provide a form-fit to prevent the tubular body (2) being pulled out, wherein the bayonet ring (4) has a plurality of inner bayonet contours (6) which are substantially geometrically identical and are arranged in a plurality of planes perpendicular to the center axis of the bayonet ring (4), and/or the tubular body (2) has a plurality of outer bayonet contours (5) which are substantially geometrically identical and are arranged in a plurality of planes perpendicular to the center axis of the tubular body (2).

2. Bayonet connection according to claim 1, **characterized in that** the bayonet ring (4) has a plurality of inner bayonet contours (6) and the tubular body (2) has a plurality of outer bayonet contours (5).

3. Bayonet connection according to any of the preceding claims, **characterized in that** the inner bayonet contour (6) is rotationally symmetrical with respect to the center axis of the bayonet ring (4) and the outer bayonet contour (5) is rotationally symmetrical with respect to the center axis of the tubular body (2).

4. Bayonet connection according to claim 3, **characterized in that** the inner bayonet contour (6) and the outer bayonet contour (5) are each formed in two angular segments.

5. Bayonet connection according to any of the preceding claims, **characterized in that,** in the assembled state of the bayonet connection, the tubular body (2) radially surrounds the connecting piece (1) in portions.

6. Bayonet connection according to claim 5, **characterized in that** the connecting piece (1) has a seal (3) on its outer circumference.

7. Bayonet connection according to any of the preceding claims, **characterized in that** the inner bayonet contour (6) is integral with the bayonet ring (4) and the outer bayonet contour (5) is integral with the tubular body (2).

## Revendications

1. Raccord à baïonnette servant à relier une tubulure (1) à un corps tubulaire (2), présentant la tubulure (1) dotée d'ailettes de baïonnette (7) agencées du côté extérieur sur la tubulure (1), le corps tubulaire (2) doté d'au moins un contour de baïonnette extérieur (5) agencé du côté extérieur sur le corps tubulaire (2) et une bague à baïonnette (4) dotée de crochets de baïonnette (8) orientés vers l'intérieur et d'au moins un contour de baïonnette intérieur (6) orienté vers l'intérieur, dans lequel dans un état monté du raccord à baïonnette, dans lequel la tubulure (1), le corps tubulaire (2) et la bague à baïonnette (4) se trouvent dans une orientation de verrouillage les uns par rapport aux autres, la bague à baïonnette (4) entoure la tubulure (1) et le corps tubulaire (2) dans la direction radiale vers l'extérieur et empêche la tubulure (1) et le corps tubulaire (2) de sortir de la bague à baïonnette (4), par le fait que, d'une part, les ailettes de baïonnette (7) et les crochets de baïonnette (8) provoquent une liaison par complémentarité de forme empêchant la sortie de la tubulure (1) et, d'autre part, le contour de baïonnette extérieur (5) et le contour de baïonnette intérieur (6) provoquent une liaison par complémentarité de forme empêchant la sortie du corps tubulaire (2), dans lequel la bague à baïonnette (4) présente une pluralité de contours de baïonnette intérieurs (6), qui sont sensiblement identiques du point de vue géométrique et sont agencés dans plusieurs plans perpendiculaires à l'axe central de la bague à baïonnette (4) et/ou le corps tubulaire (2) présente une pluralité de contours de baïonnette extérieurs (5), qui sont sensiblement identiques du point de vue géométrique et sont agencés dans plusieurs plans perpendiculaires à l'axe central du corps tubulaire (2).

2. Raccord à baïonnette selon la revendication 1, **caractérisé en ce que** la bague à baïonnette (4) présente une pluralité de contours de baïonnette intérieurs (6) et le corps tubulaire (2) présente une pluralité de contours de baïonnette extérieurs (5).

3. Raccord à baïonnette selon l'une quelconque des revendications précédentes, **caractérisé en ce que** le contour de baïonnette intérieur (6) est symétrique en rotation par rapport à l'axe médian de la bague à baïonnette (4) et le contour de baïonnette extérieur (5) est symétrique en rotation par rapport à l'axe médian du corps tubulaire (2).

4. Raccord à baïonnette selon la revendication 3, **caractérisé en ce que** le contour de baïonnette intérieur (6) et le contour de baïonnette extérieur (5) sont conçus respectivement en deux segments angulaires.

5. Raccord à baïonnette selon l'une quelconque des revendications précédentes, **caractérisé en ce que** dans l'état monté du raccord à baïonnette, le corps tubulaire (2) entoure la tubulure (1) radialement par sections.

6. Raccord à baïonnette selon une revendication 5, **caractérisé en ce que** la tubulure (1) présente un joint (3) sur sa circonférence extérieure.

7. Raccord à baïonnette selon l'une quelconque des revendications précédentes, **caractérisé en ce que** le contour de baïonnette intérieur (6) est conçu d'une seule pièce avec la bague à baïonnette (4) et le contour de baïonnette extérieur (5) est conçu d'une seule pièce avec le corps tubulaire (2).
